(19) **Europäisches Patentamt / European Patent Office / Office européen des brevets**

(11) **EP 2 187 319 A1**

(12) # EUROPEAN PATENT APPLICATION

(43) Date of publication:
**19.05.2010 Bulletin 2010/20**

(51) Int Cl.:
***G06F 17/30*** (2006.01)

(21) Application number: **09172832.9**

(22) Date of filing: **13.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **11.11.2008  LT 2008086**

(71) Applicant: **Vilnius Gediminas Technical University 10223 Vilnius (LT)**

(72) Inventors:
- **Kaklauskas, Artûras**
  **Vilnius LT-08218 (LT)**

- **Zavadskas, Edmundas Kazimieras**
  **Vilnius LT-01128 (LT)**
- **Seniut, Mark**
  **Vilnius LT-10238 (LT)**
- **Vainiûas, Povilas**
  **Vilnius LT-10221 (LT)**
- **Krutinis, Mindaugas**
  **Vilnius LT-05254 (LT)**
- **Tupenaite, Laura**
  **Vilnius LT-02167 (LT)**

(74) Representative: **Draugeliene, Virgina Adolfina Tarpine Ltd
A. P. Kavoliuko g. 24-152
04328 Vilnius (LT)**

(54) **Electronic information retrieval method and system**

(57)     This invention relates to an information retrieval method and system, which comprises the inputting of retrieval criteria, their weights and retrieval restrictions in the form of information items through interface modules (1, 2) into a module (3) which performs a comparison of the text material from a library of documents upon inputting the aforementioned criteria and according to the result of comparison module (3) selects, processes and indexes information items. For providing more flexible and more informative retrieval of information, outgoing information of module (3) further are processed in module (5) by breaking down of documents into composite parts (chapters/sections/paragraphs), which are inputted into module (6), for performing multi-criteria analysis of selected composite parts and inputs to a module (7), which designs alternative variants and inputs to module (8) for performing multi-criteria analysis of designed alternative variants and accordingly to the outputting result of the module (8), the results of the retrieval are formulated in module (9).

Fig. 1

EP 2 187 319 A1

**Description**

This invention relates to an information retrieval method and an information retrieval system.

Electronic libraries are becoming more and more popular of late, and the information contained in them is constantly enlarging. As the capacity of stored information enlarges, it becomes more and more difficult to identify desired materials. In other words, a problem with retrieval effectiveness is encountered. The most advanced electronic libraries of today employ a retrieval system that is similar to Google. The Google system is based on complex PageRank™ technology, which is being patented at this time. It ensures that the most important results always appear first. PageRank objectively assesses the importance of Internet pages. Such a priority is calculated by resolving an equation with 500 million variables and more than 2 billion terms. PageRank utilises a wide Internet structure of reference points as an organisational tool. Essentially Google assesses a reference from Page A to Page B as a "vote" of Page A in behalf of Page B. Google assesses the importance of a page in accordance with the "votes" it has gathered. Google also analyses the page of the "voters". The complicated, automatic Google retrieval method blocks off human interferences. Google is compiled so that no one can purchase a more beneficial position amid the results or otherwise influence the results for commercial purposes.

US Patent No. 5297042 discloses document retrieval system that includes an inputting unit for inputting a retrieval condition including one or a plurality of keywords and a weight value for each keyword, an operating unit having first factors corresponding to relationship values, each relationship value being defined as a degree of the relationship between two keywords out of keywords which are predetermined in the document retrieval system and second factors corresponding to importance values, each importance value being defined as a degree of importance of a keyword in each one of a plurality of documents wich are predetermined in the document retrieval system, the operation unit generating a relevance value, which represents a degree of relevance in satisfying a user's requirement, for each of the documents on the basis of the retrieval condition input from the inputting unit, the first factors and the second factors, and an outputting unit for outputting the relevance value fore ach of documents as a retrieval results.

The known retrieval system is not flexible in search because do not perform a multi-variant design of selected most rational text material (chapters/sections/paragraphs) from a library of documents and not perform their multi-criteria analyses (with the actual user participating and retaining interface with the original text) nor selects out the best alternative from the summarised integrated alternatives of the text developed from different text material from a library of documents.

US Patent Application US 2006/0047656 Al discloses a computer-readable code, system and method for retrieving one or more selected text materials from a library of documents. The system processes a user-input search query representing the content of the text to be retrieved, and accesses a word index for the documents to identify those text materials in the database having the highest word-match scores with the search query. The weights of words in the query may be adjusted to optimize the search

The known computer-readable code, system and method do not perform a multi-variant design of selected most rational text material (chapters/sections/paragraphs) from a library of documents and not perform their multi-criteria analyses (with the actual user participating and retaining interface with the original text) nor selects out the best alternative from the summarised integrated alternatives of the text developed from different text material from a library of documents. Thus the known retrieval system and method is not flexible in search.

The present invention has been made in view of the above problems, and it is an object of the present invention to provide an electronic information retrieval method and system that would be more flexible and more informative in selecting out and integrating rational electronic information, as much by the desired area as by coverage, and that would allow the actual user to participate and have an influence during the time of the operations by automatically designing, evaluating and selecting the information most suitable for him/herself.

The problem can be solved by the retrieval method for selecting information from initial electronic data bases, particularly, library of documents, which are stored in a memory blocs of computer nets in the form of information items, such as alphanumerical strings, comprising inputting of retrieval criteria, their weights and the retrieval restrictions in the form of information items through the respective interface modules into the data processing module, which performs a comparison between the documents stored in above mentioned memory blocs and inputted above mentioned criteria, wherein processed and indexed electronic documents according to the determined retrieval criteria further are processed in the next module by breaking down of documents into composite parts (chapters/sections/paragraphs) which are inputted to next module, which, according to the determined retrieval criteria, performs multi-criteria analysis of selected composite parts and outputting information of this module inputs to a another module, which designs alternative variants from received information and as information items inputs to the further module for performing multi-criteria analysis of designed alternative variants and accordingly the outputting result of analysis in this module, the results of the retrieval are formulated in next module and via the preview interface module are displayed to the user.

Following the selecting, processing and indexing of information, the selecting out of the composite parts of the documents and their further multi-criteria analysis are performed. Furthermore there is the designing of alternative variants, their analysis and the selection the most rational alternative. All this makes the retrieval system more flexible and more informative since it selects out the electronic information as much by the area as by the coverage.

Further development of this invention is that multi-criteria analysis of the composite parts of the documents, comprises the following steps: complex determination of the weights of the criteria taking into account their quantitative and qualitative characteristics; multi-criteria evaluation of the text materials; defining the utility and market value of text materials.

Another development of this invention is that designing of alternative variants from the selected information, comprises the following steps: a) development of table of codes of alternative variants of text material; b) rejection of inefficient variants; c) automatic development of alternative variants of the text based on codes compiled at the step a); d) development of alternative variants of the text describing them characterizing information; and e) development of a table of summary decision from formulated alternative variants of the text with described them characterizing information.

Preference of multi-criteria analysis and designing of alternative variants by this invention is that proposed method permits selecting the maximally rational information in the coverage that the user desires. By designing alternative variants, there's an opportunity for the user to supplement and/or correct the already inputted criteria, modify weights, repeat search. In other words, a user is provided an opportunity to intervene in the occurring retrieval and to redirect it so it takes into account the user-selected priorities and the existing situation.

The problem can be solved by another object of the present invention wherein in electronic information retrieval system for selecting information from initial electronic data bases, particularly, library of documents, which are stored in a memory blocs of computer nets in the form of information items, such as alphanumerical strings, comprising the first interface module for inputting of retrieval criteria ant their weights; the second interface module for inputting retrieval restrictions, which output means are connected with corresponding input means of module for processing and indexing text material from library of documents and which has electronic connection with data bases of library of documents stored in above mentioned memory blocs of computer nets, wherein above mentioned data processing and indexing module configured to select, process and index documents according to determined criteria and their weights as well as the indicated restrictions and has an electronic link with module in which is formulated the result of the retrieval which displayed via the preview interface module to the user, above mentioned electronik link is configured such that above mentioned module for processing and indexing retrieval documents is connected with further module, which is configured to separate out the composite parts (chapters/sections/paragraphs) that are most appropriate for the user from the documents selected in above mentioned module and by electronic connection to transmit selected composite parts to next module, which is configured to perform multi-criteria analysis of above mentioned composite parts and received information to input to another module, which is configured to formulate alternative variants of the text and by electronic connection to transmit received information items to next module, which is configured to perform the multi-criteria analysis of alternative variants of the text and received outgoing information to transmit by electronic connection to module for formulating retrieval results.

The Electronic information retrieval system provides the opportunity to receive information that is most appropriate for a specific user (such a text materials, graphics, tables, illustrations and so forth) in a specific size (from text materials of one paragraph to an unlimited size). Furthermore, in accordance with user wants, it is possible to receive material of a simpler or more complicated content. For example, the retrieval system can compile a simpler elective module for a student and a more complicated one for a scholar.

This invention is described in greater detail in the drawings, which illustrate the following:

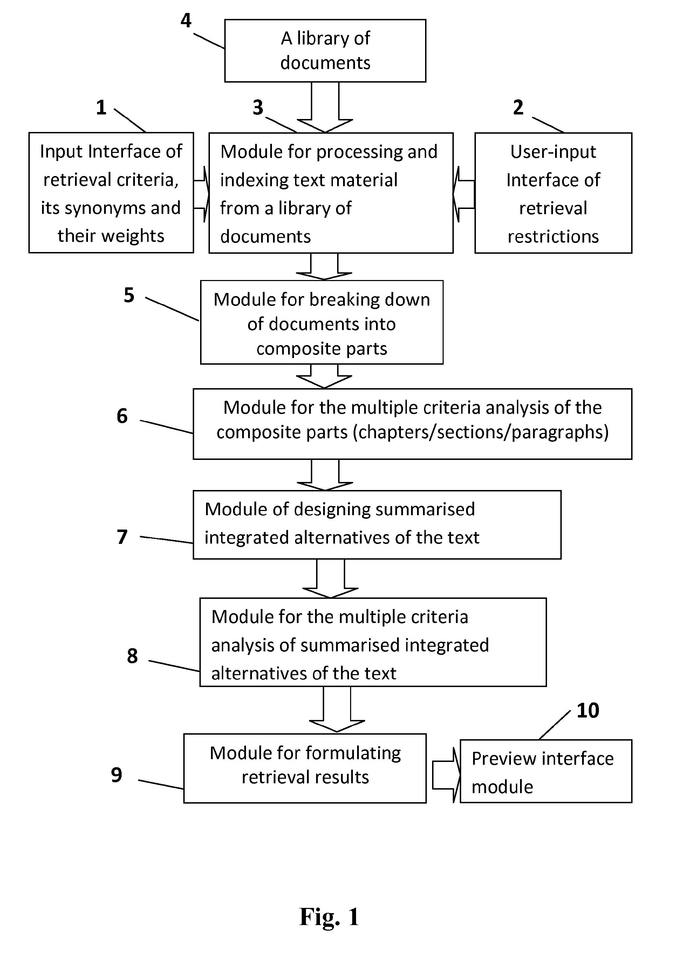

Fig. 1- block diagram of electronic information retrieval system
Fig. 2- flow chart of text utility degree and market value determination

The electronic information retrieval method for selecting information from initial electronic data bases, particularly, library of documents, which are stored in a memory blocs of computer nets in the form of information items, such as alphanumerical strings, comprises the following stages. A user assigns retrieval conditions specifically by inputting retrieval criteria in the form of information items (one or a plurality of keywords) and referencing the weight of each criterion and inputs the retrieval restrictions, for example, what coverage of the information as well as what kind of material, in a simpler or more complicated content, this user would like to receive. Once all these retrieval conditions are inputted, through the respective interface modules into the data processing module, this module performs a comparison between the documents stored in above mentioned memory blocs and inputted above mentioned criteria, by selecting out rational text material from a library of documents and performs its indexing in accordance to the input criteria and their weights. Following the selecting out and indexing of the documents under analysis, in another module distinguishes their composite parts, i.e., the paragraph, section, chapter and other parts and in the next module performs a multi-criteria analysis of these composite parts, which covers the referencing of the weights of complex criteria in consideration of their quantitative and qualitative characteristics; multi-criteria evaluation of the text materials; defining the utility and market value of text material. Further next module designs alternative variants from received information items and inputs to the next module for performing multi-criteria analysis of designed alternative variants. The design of alternative variants comprises the following stages: a) compiling tables of alternative codes of the text, b) rejecting irrational variants, c) automatically compiling text variants in accordance to the alternative codes compiled in Point a), d) development the text variants and their descriptive information and e) development a decision-making table of the sum of the compiled text variants and their descriptive information. Following this, the another next module performs a multi-criteria analysis of the designed alternative variants; according to this analysis, it determines the most rational alternative variants, formulates the retrieval results and shows them to the user.

The Electronic information retrieval system for selecting information from initial electronic data bases, particularly, library of documents, which are stored in a memory blocs of computer nets in the form of information items, such as alphanumerical strings, comprises interface module (1) for inputting of retrieval criteria and their weights and interface module (2) for inputting of retrieval restrictions. Output means of modules (1, 2) are linked with corresponding input means of a module (3) for processing and indexing text material from a library of documents (4), which are stored in memory blocs (4) of computer nets. The module (3) is configured to select and index documents in accordance with the assigned criteria and their weights inputted through interface (1) and the retrieval restrictions inputted through interface (2). The outputting indexing information items from the module (3) by electronic link is transmitted to the module (5) for breaking down of documents into composite parts (chapters/sections/paragraphs). The paragraphs, sections or chapters selected from the documents (4) under analysis in module (5) by electronic link are inputed to module (6) for its multi-criteria analysis. Outgoing result information items of module (6) by electronic link inputs into module (7) for designing variants that is designated to compile alternative variants automatically from the sum of the integrated material of text materials. The alternative variants compiled from the rational text material from a library of documents are analysed, as per a multi-criteria analysis, in module (8). The most rational alternative variants are set and these are transmitted into module (9) for formulating the retrieval result, which shows the user the selected number of alternative variants via the preview interface module (10).

Examples for realisation the different retrieval stages are presented in greater detail.

Selection of information and its indexing. All the required text material is placed into a library of documents stored in memory blocs (4) of computer nets. The user inputs the most important keywords for him/her through interface module (1) and references the weight of each one. Keywords can also be selected from the retrieval's database of keywords, where the most frequently used keywords and their weights are stored. Through the interface module (2) are inputted retrieval restrictions, a user can also reference the level of complexity and its weight regarding the material under search. The level of complexity of the material being searched is assessed on a ten-point scale. For example, the mathematically orientated sections in text material (mathematical methods and the determinations of used market and investment values) are quite complicated for certain users. By determining the most rational material being searched, its level of complexity and its significance are assessed in complex with the other criteria. The indexation of the information is performed in module (3) while a text is being indexed; i.e., it is determined how many of the searched words (their synonyms) or their combinations are repeated in the text.

As the text indexing is being performed, it is endeavoured to determine the degree to which its chapters, subchapters or paragraphs satisfy the retrieval needs of the user. A greater number of keywords in a text of a specific size indicates a greater level of satisfying user needs. The weight of a keyword indicates how much one keyword is more important to the user than another one is while searching for specific informational material. The repetition of different retrieval keywords in one sentence also defines the suitability of the text for satisfying the user's needs. Several of different retrieval keywords that a user wants in the same sentence indicate a greater suitability of the text for the user's needs.

In such a way, once having indexed selected information in module (3), the determination of the rational chapters/sections/paragraphs in the different text material from a library of documents is performed in module (5).

The multi-criteria analysis of the composite parts of selected text material is performed in module (6). This covers the following:

- complex determination of the weights of the criteria taking into account their quantitative and qualitative characteristics;
- multi-criteria analysis of the text materials;
- determination of the utility degree and market value of the text materials.

Initially the preparation of input data is performed, which is necessary for the multi-criteria analysis of a text. One of the most important stages of the multi-criteria analysis of a text is the determination of the values and weights of the criteria. Once the values and weights of the criteria have been calculated, the priority, utility degree and market value of the comparative variants are determined.

The results of the comparative analysis of the text are presented as a grouped decision making matrix where columns contain $n$ alternative text materials being considered, while all quantitative and conceptual information pertaining to them is found in lines.

Quantitative and conceptual description provides the information about various aspects of the text alternatives. Quantitative information is based on the criteria systems and subsystems, units of measure, values and initial weights as well as the data on the alternative projects development.

Conceptual description of a text presents descriptive and analytical information about the text materials and the criteria used for their definition, as well as giving the reason for the choice of this particular system of criteria, their values and weights. This part also includes information about the possible ways of multivariant design. Conceptual information is needed to make more complete and accurate evaluation of the alternatives considered. It also helps to get more useful information as well as developing a system and subsystems of criteria and defining their values and weights.

The grouped decision-making matrix divides the criteria into two groups: quantitative and qualitative. Such grouping facilitates multi-criteria analysis of the variants; it also helps to see the physical meaning of the calculations better. Multi-criteria analysis of text materials usually involves large amounts of information; thus the matrix approach ensures a more rational processing. In such case the analysed alternatives, as well as their descriptive quantitative and conceptual information, are grouped in a certain manner by developing a grouped decision-making matrix for multi-criteria analysis of the text.

Table 1. The grouped decision-making matrix for multi-criteria analysis of the text

| Quantitative information describing the text materials | | | | | | | | | |
|---|---|---|---|---|---|---|---|---|---|
| Analysed criteria | * | Weights | Measuring Units | Compared text materials | | | | | |
| | | | | 1 | 2 | ... | j | ... | n |
| Quantitative criteria | $z_1$ | $q_1$ | $m_1$ | $x_{11}$ | $x_{12}$ | ... | $x_{1j}$ | ... | $x_{1n}$ |
| | $z_2$ | $q_2$ | $m_2$ | $x_{21}$ | $x_{22}$ | ... | $x2j$ | ... | $x_{2n}$ |
| | ... | ... | ... | ... | ... | ... | ... | ... | ... |
| | $z_i$ | $q_i$ | $m_i$ | $x_{il}$ | $x_{i2}$ | ... | $x_{ij}$ | ... | $x_{in}$ |
| | ... | ... | ... | ... | ... | ... | ... | ... | ... |
| | $z_t$ | $q_t$ | $m_t$ | $x_{t1}$ | $x_{t2}$ | ... | $x_{tj}$ | ... | $x_{tn}$ |
| Quantitative criteria | $z_{t+1}$ | $q_{t+1}$ | $m_{t+1}$ | $x_{t+11}$ | $x_{t+12}$ | ... | $x_{t+1 j}$ | ... | $x_{t+1n}$ |
| | $z_{t+2}$ | $q_{t+2}$ | $m_{t+2}$ | $x_{t+21}$ | $x_{t+22}$ | ... | $x_{t+2 j}$ | ... | $x_{t+2n}$ |
| | ... | ... | ... | ... | ... | ... | ... | ... | ... |
| | $z_i$ | $q_i$ | $m_i$ | $x_{i1}$ | $x_{i2}$ | ... | $x_{ij}$ | ... | $x_{in}$ |
| | ... | ... | ... | ... | ... | ... | ... | ... | ... |
| | $z_m$ | $q_m$ | $m_m$ | $x_{m1}$ | $x_{m2}$ | ... | $x_{mj}$ | ... | $x_{mn}$ |
| Conceptual information pertinent to text materials (i.e. text, drawings, graphics, video tapes) | | | | | | | | | |
| $K_k$ | $K_z$ | $K_q$ | $K_m$ | $K_1$ | $K_2$ | ... | $K_j$ | ... | $K_n$ |
| *- The sign $z_i$ (+ (-)) indicates that a greater (less) criterion value corresponds to a higher significance for a user | | | | | | | | | |

In order to select the most rational text, the multi-criteria analysis of the text materials must be performed after the decision-making matrix is developed. The procedure involves comparison of the values and weights of the criteria describing the analysed text materials, as well as analysis of the conceptual information. The analysed text may be described only through a system of numerous criteria with different meanings and dimensions.

A method of complex determination of the weighs of the criteria taking into account their quantitative and qualitative characteristics

The expert methods are the most popular tool to determine the values and weights of qualitative criteria. The criteria weights determined with the help of the expert methods show us the difference of importance of the criteria. However, the expert methods cannot ensure determination of precise weights for quantitative criteria.

The weighs of all criteria must be coordinated among themselves, taking into consideration their quantitative and qualitative characteristics. The weighs of quantitative criteria can be exactly coordinated among themselves if the values of quantitative criteria are expressed through an equivalent monetary unit (stages 1-4). Having performed strict mutual coordination of quantitative criteria weighs, the same is done with the weighs of qualitative criteria (stages 5-7). In this case all the weighs of qualitative and quantitative criteria are coordinated exactly at the same time.

Having determined the system of criteria describing the alternatives and calculated numerical values and initial weighs of criteria and having presented them in the form of grouped decision making matrix, the user should calculate the actual weighs of criteria. The values of criteria must be calculated for the whole text utility.

The calculation of the criteria weighs is carried out in seven stages. In the stages 1-4 the weighs of quantitative criteria are identified whereas in the stages 5-7 the weighs of qualitative criteria are identified.

Stage 1. The determination of the sum of values for every quantitative criterion:

$$S_i = \sum_{j=1}^{n} x_{ij} \, , \, i = \overline{1,t} \, ; \, j = \overline{1,n} \, ; \qquad (1)$$

where $x_{ij}$ - the value of the $i$-th criterion in the $j$-th alternative of a solution; $t$ - the number of quantitative criteria; n - the number of the alternatives compared.

Stage 2. The total monetary expression of every quantitative criterion describing the investigated text utility is obtained by:

$$P_i = S_i \cdot p_i \, , \, i = \overline{1,t} \, ; \qquad (2)$$

where $p_i$ - initial weigh of the $i$ criteria. $p_i$ should be measured in such a way as, being multiplied by a quantitative criterion value, an equivalent monetary expression could be obtained.

According to their effect on the efficiency of the text utility in time the quantitative criteria may be divided into:

- short-term factors affecting the text utility for a certain period of time only;
- long-term factors affecting the text utility throughout its life cycle.

The initial weigh of long-term criteria, like resources needed for the maintenance, etc. is dependent on the repayment time of the text as well as on the evaluation in money terms of a measure unit of a criterion:

$$p_i = e \cdot f_i \, ; \qquad (3)$$

where e - repayment time of a text; f$i$ - monetary evaluation of a measure unit of the $i$ criterion.

The initial weigh of single criteria equals the measure unit of a criterion in money terms:

$$p_i = f_i \, . \qquad (4)$$

The physical meaning of the initial weigh of a quantitative criterion consists in the fact that multiplying it by the value of a quantitative criterion its monetary expression calculated over the whole period of repayment of the text (equivalent to former natural expression) is obtained.

Stage 3. The overall quantitative criteria magnitude sum expressed in money terms is determined:

$$V = \sum_{i=1}^{t} P_i \, , \, i = \overline{1,t} \, . \qquad (5)$$

Stage 4. The quantitative criteria weighs describing the text utility which can be expressed in money terms are determined as follows:

$$q_i = \frac{P_i}{V} \, , \, i = \overline{1,t} \, . \qquad (6)$$

If the above method is applied in calculation of weighs, the total sum of weighs quantitative criteria is always equal to 1:

$$\sum_{i=1}^{t} q_i = 1.\qquad(7)$$

This allows us to check if the quantitative criteria weighs are calculated correctly.
The qualitative criteria weighs pertaining to the life cycle of a text utility are determined in stages 5-7.

Stage 5. In order to achieve full coordination between the weighs of quantitative and qualitative criteria, a compared standard value ($E$) is set. It is equal to the sum of any selected weighs of quantitative criteria. One of the main requirements for this compared standard value is that according to utility it should be easily comparable with all qualitative criteria. In this case, the weighs of all qualitative criteria are determined by the comparison of their utility with the weigh of the compared standard value. E is determined according to the following formula:

$$E = \sum_{z=1}^{g} q_z;\qquad(8)$$

where g is the number of quantitative criteria included into the compared standard; $q_z$ is the weigh of z quantitative criterion included into the compared standard.

Stage 6. The initial weighs $v_i$ of qualitative criteria are determined by expert methods comparing their relative weigh to the weigh E of the selected compared standard. In this case, relative weighs of qualitative criteria should be expressed in per cent. For instance, if the expert methods revealed that the complication of a text utility made up 6.2% of the utility of the compared standard (for example, weight of all searching keywords), the weigh of the complication of a text is $v$=6,2%.

Stage 7. The weighs of qualitative criteria are determined as follows:

$$q_i = \frac{v_i \cdot E}{100}, \; i=t+1,\ldots, m.\qquad(9)$$

The above method allow to determine weighs of criteria which are maximally interrelated and depend on qualitative and quantitative characteristics of all criteria.

A method of multiple criteria complex proportional evaluation of the of text materials

This method assumes direct and proportional dependence of significance and priority of investigated text versions on a system of criteria adequately describing the alternatives and on values and weighs of the criteria. The system of criteria is determined and the values and initial weighs of criteria are calculated by experts. Stakeholder groups (user, employer, etc.) may revise all this information considering their goals and current possibilities (e.g. certain articles or book chapters might cost money). Therefore, the assessment results of alternatives explicitly reflect the initial data jointly submitted by experts and stakeholder groups.

The determination of significance and priority of alternatives is carried out in four stages. Stage 1. The weighted normalized decision making matrix D is formed. The purpose of this stage is to receive dimensionless weighted values from the comparative indexes. When the dimensionless values of the indexes are known, all criteria, originally having different dimensions, can be compared. The following formula is used for this purpose:

$$d_{ij} = \frac{x_{ij} \cdot q_i}{\sum_{j=1}^{n} x_{ij}}, \quad i=\overline{1,m}; \quad j=\overline{1,n}.\qquad(10)$$

where $x_{ij}$ - the value of the $i$-th criterion in the $j$-th alternative; $m$ - the number of criteria; $n$ - the number of the alternatives compared; $q_i$ - weigh of i-th criterion.

The sum of dimensionless weighted index values $d_{ij}$ of each criterion $x_i$ is always equal to the weigh $q_i$ of this criterion:

$$q_i = \sum_{j=1}^{n} d_{ij}, \quad i=\overline{1,m}; j=\overline{1, n}. \qquad (11)$$

In other words, the value of weigh $q_i$ of the investigated criterion is proportionally distributed among all alternative versions $a_j$ according to their values $x_{ij}$.

Stage 2. The sums of weighted normalized indexes describing the $j$-th version are calculated. The versions are described by minimizing indexes $S_{-j}$ and maximizing indexes $S_{+j}$. The lower value of minimizing indexes is better (complication of a text, etc.). The greater value of maximizing indexes is better (iterative of searching keywords, etc.). The sums are calculated according to the formula:

$$S_{+j} = \sum_{i=1}^{m} d_{+ij}; \quad S_{-j} = \sum_{i=1}^{m} d_{-ij}, \quad i=\overline{1,m}; j=\overline{1, n}. \qquad (12)$$

In this case, the values $S_{+j}$ (the greater is this value (text utility 'pluses'), the more satisfied are the users) *and* $S_{-j}$ (the lower is this value (text utility 'minuses'), the better is goal attainment by the users) express the degree of goals attained by the users in each alternative text. In any case the sums of 'pluses' $S_{+j}$ and 'minuses' $S_{-j}$ of all alternative text materials always is respectively equal to all sums of weighs of maximizing and minimizing criteria:

$$S_+ = \sum_{j=1}^{n} S_{+j} = \sum_{i=1}^{m}\sum_{j=1}^{n} d_{+ij},$$
$$S_- = \sum_{j=1}^{n} S_{-j} = \sum_{i=1}^{m}\sum_{j=1}^{n} d_{-ij}, \quad i=\overline{1,m}; j=\overline{1, n}. \qquad (13)$$

In this way, the calculations made may be additionally checked.

Stage 3. The significance (efficiency) of comparative versions is determined on the basis of describing positive text utility ('pluses') and negative text utility ('minuses') characteristics. Relative significance $Q_j$ of each text utility $a_j$ is found according to the formula:

$$Q_j = S_{+j} + \frac{S_{-min} \cdot \sum_{j=1}^{n} S_{-j}}{S_{-j} \cdot \sum_{j=1}^{n} \frac{S_{-min}}{S_{-j}}}, \quad j=\overline{1,n}. \qquad (14)$$

Stage 4. Priority determination of text materials. The greater is the $Q_j$ the higher is the efficiency (priority) of the text.

The analysis of the method presented makes it possible to state that it may be easily applied to evaluating the text materials utility and selecting most efficient of them, being fully aware of a physical meaning of the process. Moreover, it allowed formulate a reduced criterion $Q_j$ which is directly proportional to the relative effect of the compared criteria values $x_{ij}$ and weighs $q_i$ on the end result.

Table 2. The results of multi-criteria analysis of the text materials

| Quantitative information pertinent to text materials utility | | | | | | | | | |
|---|---|---|---|---|---|---|---|---|---|
| Criteria describing the text | * | Weight | Measuring units | Compared text materials | | | | | |
| | | | | $a_1$ | $a_2$ | ... | $a_j$ | ... | $a_n$ |
| $X_1$ | $z_1$ | $q_1$ | $m_1$ | $d_{11}$ | $d_{12}$ | ... | $d_{1j}$, | ... | $d_{1n}$ |
| $X_2$ | $z_2$ | $q_2$ | $m_2$ | $d_{21}$ | $d_{22}$ | ... | $d_{2j}$ | ... | $d_{2n}$ |
| $X_3$ | $z_3$ | $q_3$ | $m_3$ | $d_{31}$ | $d_{32}$ | ... | $d_{3j}$ | ... | $d_{3n}$ |
| ... | ... | ... | ... | ... | ... | ... | ... | ... | ... |
| $X_i$ | $z_i$ | $q_i$ | $m_i$ | $d_{i1}$ | $d_{i2}$ | ... | $d_{ij}$ | ... | $d_{in}$ |
| ... | ... | ... | ... | ... | ... | ... | ... | ... | ... |
| $X_m$ | $z_m$ | $q_m$ | $m_m$ | $d_{m1}$ | $d_{m2}$ | ... | $d_{mj}$ | ... | $d_{mn}$ |
| The sums of weighted normalized maximizing (text 'pluses') indices of the text utility | | | | $S_{+1}$ | $S_{+2}$ | ... | $S_{+j}$ | ... | $S_{+n}$ |
| The sums of weighted normalized minimizing (text 'minuses') indices of the text utility | | | | $S_{-1}$ | $S_{-2}$ | ... | $S_{-j}$ | ... | $S_{-n}$ |
| Significance of the text | | | | $Q_1$ | $Q_2$ | ... | $Q_i$ | ... | $Q_n$ |
| Priority of the text | | | | $P_1$ | $P_2$ | ... | $P_j$ | ... | $P_n$ |
| Utility degree of the text (%) | | | | $N_1$ | $N_2$ | ... | $N_i$ | ... | $N_n$ |
| * - The sign $Z_i$ (+ (-)) indicates that a greater (less) criterion value corresponds to a greater significance for a user | | | | | | | | | |

Method of defining the utility degree and market value of text material alternatives

Significance $Q_j$ of text $a_j$ indicates satisfaction degree of demands and goals pursued by the users - the greater is the $Q_j$ the higher is the efficiency of the text alternative. In this case, the significance $Q_{max}$ of the most rational text will always be the highest. The significances of all remaining text materials are lower as compared with the most rational one. This means that total demands and goals of users will be satisfied to a smaller extent than it would be in case of the best text.

However, in practice users are more interested in the utility degree and the related market value of the analysed text materials instead of their weights and priorities. In other words, users are most interested in the texts which would best meet their needs and goals, which would cost. The concepts of the utility degree and the market value of the text are used to express these evaluation results.

In order to make a more precise evaluation of the advantages and disadvantages of the analysed texts, to compare the advantages and disadvantages with the needs and goals of user and to match all these factors with prices, it is necessary to determine the utility degrees of the texts and the market value of the evaluated text.

The utility degree of texts directly depends on the system of the descriptive criteria, on their values and weights. If one text returns one type of the best indicators for search keywords, and the other text returns other type of indicators for search keywords and quality, and the multi-criteria evaluation of the texts returns the same significance for both, then the analysed texts have the same degree of utility.

With the increase (decrease) of the significance of a text analyzed, its degree of utility also increases (decreases). The utility degree of text is determined by comparing the text analysed with the most efficient text. In this case, all the utility degree values related to the text analyzed will be ranged from 0% to 100%. This will facilitate visual assessment of text efficiency.

In order to determine which price of the analysed text would make it equally competitive in the market, the multi-criteria Method for determination of the utility degree and market value of the texts was suggested after integrated assessment of all advantages and disadvantages of the analysed texts.

The degrees of utility of the text considered as well as the market value of a text being valuated are determined in seven stages.

Stage 1. The formula used for the calculation of text $a_j$ utility degree $N_j$ is given below:

$$N_j = \left( Q_j : Q_{max} \right) \cdot 100\%. \qquad (15)$$

here $Q_j$ and $Q_{max}$ are the significances of the text obtained from the equation 14.

The degree of utility $N_j$ of text $a_j$ indicates the level of satisfying the needs of the user interested in the text. The more goals are achieved and the more important they are, the higher is the utility degree of the text. Since users are mostly interested in how much more efficient particular text are than the others (which ones can better satisfy their needs), then it is more advisable to use the concept of text utility degree rather than significance when choosing the most efficient solution.

A utility degree of text reflects the extent to which the goals pursued by the users are attained. Therefore, it may be used as a basis for determining text market value. The more objectives are attained and the more significant they are the higher will be utility degree of text and its market value.

Stage 2. The efficiency degree $E_{ji}$ of text $a_j$ is calculated. It shows by how many percent a text $a_j$ compared with text $a_i$. $E_{ji}$ is better by comparing the degrees of utility of the text considered:

$$E_{ji} = N_j - N_i. \tag{16}$$

The received results are presented as a matrix clearly showing utility differences of the text (see Table 3).

Stage 3. The average deviation $k_j$ of the utility degree $N_j$ of the text $a_j$ from the same index of other text ($n$-1) is being calculated.

$$k_j = \sum_{i=1}^{n} E_{ji} : (n - 1). \tag{17}$$

Table 3. Calculation of average deviations of the text materials utility degrees

| Text considered | Utility degree deviation of a text analyzed compared to other text, % | | | | | Average deviation $k_j$ of utility degree $N_j$ of text $a_j$ compared to other (n-1) text, % |
|---|---|---|---|---|---|---|
| | $a_1$ | $a_2$ | $a_3$ | $a_i$ | $a_n$ | |
| $a_1$ | 0 | $E_{12}$ | $E_{13}$ | ... | $E_{1n}$ | $k_1$ |
| $a_2$ | $E_{21}$ | 0 $E_{32}$ | $E_{23}$ | ... | $E_{2n}$ | $k_2$ |
| $a_3$ | $E_{31}$ | ... | 0 | ... | $E_{3n}$ | $k_3$ |
| ... | ... | $E_{j2}$ | ... | ... | ... | ... |
| $a_j$ | $E_{j1}$ | ... | $E_{j3}$ | ... | $E_{jn}$ | $k_j$ |
| ... | ... | $E_{n2}$ | ... | ... | ... | ... |
| $a_n$ | $E_{n1}$ | | $E_{n3}$ | ... | 0 | $k_n$ |

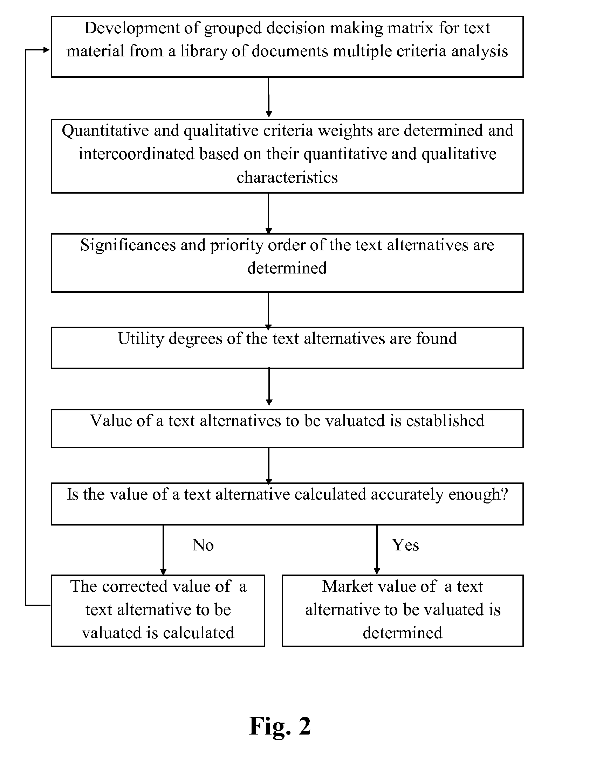

Stage 4. The development of a grouped decision making matrix for text materials multi-criteria analysis. The market value of a text being valuated is calculated according to a block-diagram presented in Fig. 2.

At the beginning, a grouped decision making matrix for text multi-criteria analysis is developed (see Table 5), the first criterion of which is based on the actual prices of the text compared and the market value of a text being valuated. The initial value of a text being valuated is obtained from the following equation:

$$x_{11} = \sum_{j=2}^{n} x_{1j} : (n - 1). \tag{18}$$

Table 4. A grouped decision making matrix for text multi-criteria analysis

| Criteria describing the compared text materials | * | Weight | Measuring units | Text to be valuated and comparison text materials | | | | | |
|---|---|---|---|---|---|---|---|---|---|
| | | | | $a_1$ | $a_2$ | ... | $a_j$ | ... | $a_n$ |
| 1. Price of a text $a_1$ being valuated and actual prices of | $z_1$ | $q_1$ | $m_1$ | $x_{11}$ | $x_{12}$ | ... | $x_{1j}$ | ... | $x_{1n}$ |
| comparison standard text ($a_2$ -$a_n$) | | | | | | | | | |
| | $z_2$ | $q_2$ | $m_2$ | $x_{21}$ | $x_{22}$ | ... | $x_{2i}$ | ... | $x_{2n}$ |
| | ... | ... | ... | ... | ... | ... | ... | ... | ... |
| Quantitative criteria | $z_i$ | $q_i$ | $m_i$ | $x_{ii}$ | $x_{i2}$ | ... | $x_{ij}$ | ... | $x_{in}$ |
| | ... | ... | ... | ... | ... | ... | ... | ... | ... |
| | $z_t$ | $q_t$ | $m_t$ | $x_{t1}$ | $x_{t2}$ | ... | $x_{ti}$ | ... | $x_{tn}$ |
| | $z_{t+1}$ | $q_{t+1}$ | $m_{t+1}$ | $x_{t+11}$ | $x_{t+12}$ | ... | $x_{t+1j}$ | ... | $x_{t+1n}$ |
| Qualitative criteria | $z_{t+2}$ | $q_{t+2}$ | $m_{t+2}$ | $x_{t+21}$ | $x_{t+22}$ | ... | $x_{t+2j}$ | ... | $x_{t+2n}$ |
| | ... | ... | ... | ... | ... | ... | ... | ... | ... |
| | $z_i$ | $q_i$ | $m_i$ | $x_{i1}$ | $x_{i2}$ | ... | $x_{ij}$ | ... | $x_{in}$ |
| | ... | ... | ... | ... | ... | ... | ... | ... | ... |
| | $z_m$ | $q_m$ | $m_m$ | $x_{m1}$ | $x_{m2}$ | ... | $x_{mi}$ | ... | $x_{mn}$ |
| * - The sign $z_i$ (+ (-)) indicates that a greater (less) criterion value corresponds to a greater significance for a user | | | | | | | | | |

In this matrix, a text $a_1$ to be valuated should be assigned the market value ($X_{11-R}$). Other comparison standard text ($a_2$-$a_n$) prices ($X_{12}$-$X_{1n}$) known. All the values and weighs of the criteria relating to other text are also known (see Table 4).

The problem may be stated as follows: what market value $X_{11-R}$ of a valuated text $a_1$ will make it equally competitive on the market with comparison standard text ($a_2$-$a_n$)? This may be determined if a complex analysis of the benefits and drawbacks of the text is made.

Using a grouped decision making matrix (see Table 4) and the equations 1-18 the calculations are made.

Stage 5. The corrected value $X_{11}$-$p$ of a text to be valuated $a_1$ is calculated:

$$x_{11-p} = x_{11} * (1 + k_1 : 100). \qquad (19)$$

Stage 6. It is determined whether the corrected value $X_{11-R}$ of a text being valuated $a_1$, had been calculated accurately enough:

$$| k_1 | < s, \qquad (20)$$

where $s$ is the accuracy, %, to be achieved in calculating the market value $X_{11-p}$ of a text $a_1$. For example, given $s$ = 0,5%, the number of approximations in calculation will be lower than at $s$ =0,1 %.

Stage 7. The market value $x_{11-R}$ of a text $a_1$ to be valuated is determined. If inequality 20 is satisfied the market value of a text $a_1$ may be found as follows:

$$x_{11-R} = x_{11-p} \qquad (21)$$

If inequality 20 is not satisfied this means that the market value of a text being valuated had not been calculated accurately enough and the approximation cycle should be repeated. In this case, the corrected market value $X_{11}=X_{11-p}$ of a text being valuated is substituted into a grouped decision making matrix of text multi-criteria analysis and the calculations according to the formulae 1-21 should be repeated until the inequation 20 is satisfied.

Solving the problem of determining the market value $x_{11\text{-}R}$ of a text $a_1$ being valuated, which would make it equally competitive on the market compared with the text $(a_2 - a_n)$, a particular Method of defining the utility degree and market value of a text was suggested. This was based on a complex analysis of all the benefits and drawbacks of the text considered.

According to this method the text utility degree and the market value of a text being estimated are directly proportional to the system of the criteria adequately describing them and the values and weighs of these criteria.

A method of multi-criteria multivariant design of summarised integrated variants of the text

Multi-variant design and multi-criteria analysis of the summarised integrated variants of the text involve abundant information that must be assessed in an integrated manner. There may be tens or hundreds of thousands of possible summarised integrated variants of the text. Each alternative is described by conceptual and quantitative information. The multi-criteria alternative variant design of summarised integrated variants of the text consists of 5 consecutive steps, which include:

- Drawing the table of codes of text material from a library of documents (the formation of the alternative codes and conceptual and quantitative data provided with their help)
- Rej ection of inefficient versions
- Computer-aided development of summarised integrated alternatives of the text based on codes of text material from a library of documents
- Development of summarised integrated alternatives of the text and the conceptual and quantitative information describing them
- Development of summary decision making table of all summarised integrated alternatives of the text obtained and overall related conceptual and quantitative information

Let us consider these stages.

In order to reduce the amount of information being used in computer-aided multivariant design the codes of the text material from a library of documents are used. In this case, any $i$ text material from a library of documents of $j$ chapters/sections/paragraphs alternative is *given $a_{ij}$* code providing thorough quantitative (system of criteria, units of measure, weighs, values, as well as a minimizing or maximizing criterion) and conceptual information about the alternative being considered (see Table 5). Thus, the use of codes of the text material from a library of documents in computer-aided multivariant design reduces the volume of information to be processed providing better insight into a physical meaning of computations.

Codes, with conceptual and quantitative information provided, are used for describing all available alternatives of text material from a library of documents. The total number of these codes makes the table of codes of text material from a library of documents allowing to get the alternative versions in a more simple way (see Table 5). As can be seen from Table 5, it contains c text material from a library of documents (1st text material from a library of documents, 2nd text material from a library of documents, $i$th text material from a library of documents, etc) of the $n_i$ alternative chapters/ sections/paragraphs versions codes. Any $i$ line of the code table represents the codes of $A_i$ text material from a library of documents $a_{ij}$ chapters/sections/paragraphs. If the information relating to the text material from a library of documents in the code table is represented by codes, then the code contains quantitative and conceptual information (see Table 5). In this case, $n_i$ chapters/sections/paragraphs of any $i$ text material from a library of documents are being considered in developing the summarised integrated alternatives of the text. Thus, the maximum number of the summarised integrated alternatives of the text obtained may be computed as follows:

$$k = \prod_{i=1}^{c} n_i \,, \qquad\qquad (22)$$

where c is the number of text material from a library of documents considered in developing a summarised integrated alternatives of the text; $n_i$ - is the number of $i$ chapter/section/paragraph alternatives to be used in developing a summarised integrated alternatives of the text.

Table 5. Codes of text material from a library of documents with conceptual and quantitative information

| Text material from a library of documents | The codes of the alternative |
|---|---|

| considered | chapters/sections/paragraphs considered | | | | | | |
|---|---|---|---|---|---|---|---|
| | 1 | 2 | 3 | ... | j | ... | $n_i$ |
| 1st text material from a library of documents | $a_{11}$ | $a_{12}$ | $a_{13}$ | ... | $a_{1j}$ | ... | $a_{1\,n1}$ |
| 2nd text material from a library of documents | $a_{21}$ | $a_{22}$ | $a_{23}$ | ... | $a_{2j}$ | ... | $a_{2\,n2}$ |
| ... | ... | ... | ... | ... | ... | ... | ... |
| ith text material from a library of documents | $a_{i1}$ | $a_{i2}$ | $a_{i3}$ | ... | $a_{ij}$ | ... | $a_{i\,ni}$ |
| ... | ... | ... | ... | ... | ... | ... | ... |
| cth text material from a library of documents | $a_{c1}$ | $a_{c2}$ | $a_{c3}$ | ... | $a_{cj}$ | ... | $a_{c\,nc}$ |

The information provided by code $a_{ij}$ of $i$ text material from a library of documents $j$ chapters/sections/paragraphs

| Conceptual information | Quantitative information | | | | | | |
|---|---|---|---|---|---|---|---|
| | Cost, $X_1$ | 1st keyword, $X_2$ | 2nd keyword, $X_3$ | ... | $X_j$ | ... | Text complexity, $X_n$ |
| $K_{ij}$ | $x_{ij\,1}$ | $x_{ij\,2}$ | $x_{ij\,3}$ | ... | $x_{ij\,j}$ | ... | $x_{ij\,n}$ |
| | | | | | | | |
| Units of measurement | Euro | Number of recurrences | Number of recurrences | ... | ... | ... | Points |
| Weight | $q_{i\,1}$ | $q_{i\,2}$ | $q_{i\,3}$ | ... | $q_{i\,j}$ | ... | $q_{i\,n}$ |
| * | $z_{i\,1}$ | $z_{i\,2}$ | $z_{i\,3}$ | ... | $z_{i\,j}$ | ... | $z_{i\,n}$ |

* - Signs $z_{ij}$ (+ (−)) mean, that corresponding higher (lower) value of the criterion better satisfies the user's needs

Table 6. Most rational alternatives of the text material from a library of documents set according their priorities

| Text material from a library of documents considered (solutions) | Priority of the best alternative chapters/sections/paragraphs | | | | | | |
|---|---|---|---|---|---|---|---|
| | 1 | 2 | 3 | ... | j | ... | p |
| 1st text material from a library of documents | $a_{11}$ | $a_{12}$ | $a_{13}$ | ... | $a_{1i}$ | ... | $a_{1p}$ |
| 2nd text material from a library of documents | $a_{21}$ | $a_{22}$ | $a_{23}$ | ... | $a_{2i}$ | ... | $a_{2p}$ |
| ... | ... | ... | ... | ... | ... | ... | ... |
| ith text material from a library of documents | $a_{i1}$ | $a_{i2}$ | $a_{i3}$ | ... | $a_{ij}$ | ... | $a_{ip}$ |
| ... | ... | ... | ... | ... | ... | ... | ... |
| cth text material from a library of documents | $a_{c1}$ | $a_{c2}$ | $a_{c3}$ | ... | $a_{cj}$ | ... | $a_{cp}$ |

For example, if in determining summarised integrated text alternatives 10 chapters/sections/paragraphs versions are considered for any of 10 text material from a library of documents under analysis, then, according to equation 22 maximum ten billion such variants will be obtained. It is evident that in this and similar cases it is hardly possible and reasonable to analyze all the required versions from various perspectives. Therefore, it is advisable to reduce their number as follows. If c text material from a library of documents of having $n_i$ chapters/sections/paragraphs alternatives allows k combinations (equation 22) then, by using multi-criteria analysis methods, p most rational chapter/section/ paragraph versions should be chosen from every text material from a library of documents for further consideration (see Table 6). In this way, not rational variants are being removed. The best chapters/sections/paragraphs alternatives obtained are then grouped according to priority considerations. In Table 6 $a_{i1}$ is a code of the best chapter/section/paragraph variant of $i$ text material from a library of documents, while $a_{ip}$ is a code of document worst version. Then, summarised integrated text variants are being developed based on the rational p chapters/sections/paragraphs chosen alternatives of c documents. At the beginning, this process should involve the codes of the alternative chapters/sections/paragraphs. The first summarised integrated text variant is obtained by analyzing the best chapter/section/paragraph variants according to the priority order (see Table 6 and 7). The last summarised integrated text variant is based on chapter/section/ paragraph versions from the bottom of priority table, while intermediate summarised integrated text variants are obtained with account of the versions found in the middle of this table. For example, the first summarised integrated text version is based on $a_{11}$, $a_{21}$, $a_{i1}$, $a_{c1}$, etc. chapter/section/paragraph variants. The last summarised integrated text version takes into account $a1_p$, $a_{2p}$, $a_{ip}$, $a_{cp}$, etc. chapter/section/paragraph variants. In this case, combinations are obtained by using $p$ chapter/section/paragraph alternatives from any c documents. Therefore, the maximum number of the summarised integrated text alternatives obtained may be determined from the following expression:

$$K = \prod_{i=1}^{c} p \quad , \qquad\qquad (23)$$

where c is the number of text material from a library of documents used in determining a required summarised integrated text; p is the number of the best chapters/sections/paragraphs variants used in developing a required summarised integrated text.

Table 7. Automated development of variants of summarised integrated text using the codes of chapters/sections/ paragraphs alternatives

| Formulated variants of summarised integrated text | Formulation of variants of summarised integrated text using the codes of the best chapters/sections of each text material from a library of documents | | | | | | | | | | | |
|---|---|---|---|---|---|---|---|---|---|---|---|---|
| | 1 | 2 | 3 | ... | p | p+1 | p+2 | p+3 | ... | 2p | ... | K |
| 1st variant of summarised integrated text | $a_{11}$ | $a_{11}$ | $a_{11}$ | ... | $a_{11}$ | $a_{11}$ | $a_{11}$ | $a_{11}$ | ... | $a_{11}$ | ... | $a_{1p}$ |
| 2nd variant of summarised integrated text | $a_{21}$ | $a_{21}$ | $a_{21}$ | ... | $a_{21}$ | $a_{21}$ | $a_{21}$ | $a_{21}$ | ... | $a_{21}$ | ... | $a_{2p}$ |
| ... | ... | ... | ... | ... | ... | ... | ... | ... | ... | ... | ... | ... |
| ith variant of summarised integrated text | $a_{i1}$ | $a_{i1}$ | $a_{i1}$ | ... | $a_{i1}$ | $a_{i1}$ | $a_{i1}$ | $a_{i1}$ | ... | $a_{i1}$ | ... | $a_ip$ |
| ... | ... | ... | ... | ... | ... | ... | ... | ... | ... | ... | ... | ... |
| cth variant of summarised integrated text | $ac_1$ | $a_{c2}$ | $a_{c3}$ | ... | $a_{cp}$ | $a_{c1}$ | $a_{c2}$ | $a_{c3}$ | ... | $a_{cp}$ | ... | $a_{cp}$ |

While the alternatives of the summarised integrated text in Table 7 are formulated using the codes of the best chapters/sections/paragraphs of each text material from a library of documents, Table 8, instead of the codes of the best chapters/sections/paragraphs of each text material from a library of documents, provides the conceptual and quantitative information describing the alternatives. This difference is clearly visible in Tables 7 and 8 if we examine the variants of summarised integrated text marked as *1*, *2*, *p* and *K*. A specific summarised integrated text variant is analysed by recalculating the values of the same criterion of different chapters/sections describing the text into a single reduced value.

When the values of the same criterion for different best chapters/sections/paragraphs of each text material from a library of documents (e.g. various search keywords, text complexity) are added together to get one integrated value, the utility degrees and priorities of such chapters/sections/paragraphs are evaluated. For example, any search user may attribute different weight to text complexity and separate keywords. Moreover, when different users of the System search by different keywords, the final integrated text will be different, because the search users attribute different weights to the same search keywords.

Table 8. Formulation of variants of summarised integrated text and their defining information

| Chapters/ sections/ paragraphs of summarised integrated variants of the document | Information which describes summarised integrated variants of the text | | | | | | | |
|---|---|---|---|---|---|---|---|---|
| | Conceptual | Quantitative | | | | | | |
| | | Cost, $X_1$ (Euro) | 1st keyword, $X_2$ (number of recurrences) | 2nd keyword, $X_3$ (number of recurrences) | ... | $X_j$ | ... | Text complexity, $X_n$ (Points) |
| | | Weights | | | | | | |
| | | $q_1$ | $q_2$ | $q_3$ | ... | $q_i$ | ... | $q_n$ |
| | Information which describes the *1*st summarised integrated variant of the text | | | | | | | |
| 1. $a_{11}$ | $K_{11}$ | $x_{11\,1}$ | $x_{11\,2}$ | $x_{11\,3}$ | ... | $x_{11\,j}$ | ... | $x_{11\,n}$ |
| 2. $a_{21}$ | $K_{21}$ | $x_{21\,1}$ | $x_{21\,2}$ | $x_{21\,3}$ | ... | $x_{21\,j}$ | ... | $x_{21\,n}$ |
| ... | | ... | ... | ... | ... | ... | ... | ... |
| i. $a_{i1}$ | $K_{i1}$ | $x_{i1\,1}$ | $x_{i1\,2}$ | $x_{i1\,3}$ | ... | $x_{i1\,j}$ | ... | $x_{i1\,n}$ |
| ... | | ... | ... | ... | ... | ... | ... | ... |
| c. $a_{c1}$ | $K_{c1}$ | $x_{c1\,1}$ | $x_{c1\,2}$ | $x_{c1\,3}$ | ... | $x_{c1\,j}$ | ... | $x_{c1\,n}$ |
| | Information which describes the 2nd summarised integrated variant of the text | | | | | | | |
| 1. $a_{11}$ | $K_{11}$ | $x_{11\,1}$ | $x_{112}$ | $x_{11\,3}$ | ... | $x_{11\,j}$ | ... | $x_{11\,n}$ |
| 2. $a_{21}$ | $K_{21}$ | $x_{21\,1}$ | $X_{21\,2}$ | $x_{21\,3}$ | ... | $x_{21\,j}$ | ... | $x_{21\,n}$ |
| ... | | ... | ... | ... | ... | ... | ... | ... |
| i. $a_{i1}$ | $K_{i1}$ | $x_{i1\,1}$ | $x_{i12}$ | $x_{i1\,3}$ | ... | $x_{i1\,j}$ | ... | $x_{i1\,n}$ |
| ... | ... | ... | ... | ... | ... | ... | ... | ... |
| c. $a_{c2}$ | $K_{c2}$ | $x_{c2\,1}$ | $x_{c22}$ | $x_{c2\,3}$ | ... | $x_{c2\,j}$ | ... | $x_{c2\,n}$ |
| ... | | ... | ... | ... | . | ... | . | ... |
| | Information which describes the *p*-ht summarised integrated variant of the text | | | | | | | |
| 1. $a_{11}$ | $K_{11}$ | $x_{11\,1}$ | $x_{11\,2}$ | $x_{11\,3}$ | ... | $x_{11\,j}$ | ... | $x_{11\,n}$ |
| 2. $a_{21}$ | $K_{21}$ | $x_{21\,1}$ | $x_{21\,2}$ | $x_{21\,3}$ | ... | $x_{21\,j}$ | ... | $x_{21\,n}$ |
| ... | | ... | ... | ... | ... | ... | ... | ... |
| i. $a_{i1}$ | $K_{i1}$ | $x_{i1\,1}$ | $x_{i1\,2}$ | $x_{i1\,3}$ | ... | $x_{i1\,j}$ | ... | $x_{i1\,n}$ |
| ... | | ... | ... | ... | ... | ... | ... | ... |
| c. $a_{cp}$ | $K_{cp}$ | $x_{cp\,1}$ | $x_{cp\,2}$ | $x_{cp\,3}$ | ... | $x_{cp\,j}$ | ... | $x_{cp\,n}$ |
| ... | ... | ... | ... | ... | . | ... | . | ... |

(continued)

| | Information which describes the last (*K*) summarised integrated variant of the text | | | | | | | |
|---|---|---|---|---|---|---|---|---|
| 1. $a_{1p}$ | $K_{1p}$ | $x_{1p\,1}$ | $x_{1p\,2}$ | $x_{1p\,3}$ | ... | $x_{1p\,j}$ | ... | $x_{1p\,n}$ |
| 2. $a_{2p}$ | $K_{2p}$ | $x_{2p\,1}$ | $x_{2p\,2}$ | $x_{2p\,3}$ | ... | $x_{2p\,j}$ | ... | $x_{2p\,n}$ |
| ... | | ... | ... | ... | ... | ... | ... | ... |
| i. $a_{ip}$ | $K_{ip}$ | $x_{ip\,1}$ | $x_{ip\,2}$ | $x_{ip\,3}$ | ... | $x_{ip\,j}$ | ... | $x_{ip\,n}$ |
| ... | | ... | ... | ... | ... | ... | ... | ... |
| c. $a_{cp}$ | $K_{cp}$ | $x_{cp\,1}$ | $x_{cp\,2}$ | $x_{cp\,3}$ | ... | $x_{cp\,j}$ | ... | $x_{cp\,n}$ |

Table 9. Summarised decision-making table for the formulated summarised integrated variants of the document, as well as their defining information

| The formulated summarised integrated variants of the text | Information describing the formulated summarised integrated variants of the text | | | | | | | |
|---|---|---|---|---|---|---|---|---|
| | Conceptual | Quantitative | | | | | | |
| | | Cost, $X_1$ (Euro) | 1st keyword, $X_2$ (number of recurrences) | 2nd keywords, $X_3$ (number of recurrences) | ... | $X_j$ | ... | Text complexity, $X_n$ (points) |
| 1 | $K_1$ | $x_{11}$ | $x_{12}$ | $x_{13}$ | ... | $x_{1j}$ | ... | $x_{1n}$ |
| 2 | $K_2$ | $x_{21}$ | $x_{22}$ | $x_{23}$ | ... | $x_{2j}$ | ... | $x_{2n}$ |
| 3 | $K_3$ | $x_{31}$ | $x_{32}$ | $x_{33}$ | ... | $x_{3j}$ | ... | $x_{3n}$ |
| ... | | ... | ... | ... | ... | ... | ... | ... |
| i | $K_i$ | $x_{i1}$ | $x_{i2}$ | $x_{i3}$ | ... | $x_{ij}$ | ... | $x_{in}$ |
| ... | | ... | ... | ... | ... | ... | ... | ... |
| K | $K_K$ | $x_{K1}$ | $x_{K2}$ | $x_{K3}$ | ... | $x_{Kj}$ | ... | $x_{Kn}$ |
| Weighs of criteria | | $q_1$ | $q_2$ | $q_3$ | ... | $q_j$ | ... | $q_n$ |
| Measuring units of criteria | | Euro | Number of recurrences | Number of recurrences | ... | ... | ... | Points |

When users formulate summarised integrated alternatives of texts with the help of this method considering the conceptual information and using the expert methods, they can easily supplement or revise criteria weights and values of qualitative criteria by user priorities and current situation.

In case all chapters/sections/paragraphs *p* of *c* text material from a library of documents cannot be matched, they are divided into groups which facilitate matching of variants of chapters/sections/paragraphs. Then the method of multiple criteria multi variant design of summarised integrated variants of the text is used to formulate the summarised integrated alternatives of texts.

**Claims**

1. Electronic information retrieval method for selecting information from initial electronic data bases, particularly, library of documents, which are stored in a memory blocs (4) of computer nets in the form of information items, such as alphanumerical strings, comprising inputting of retrieval criteria, their weights and the retrieval restrictions in the form of information items through the respective interface modules (1, 2) into the data processing module (3), which performs a comparison between the documents stored in above mentioned memory blocs (4) and the inputted above mentioned criteria and, according to the result of comparison, selects, processes and indexes documents, which respectively are transferred to module (9) in which is formulated the result of the retrieval and it is displayed via the preview interface module (10) to the user, **characterised in that** processed and indexed electronic documents according to the determined retrieval criteria in the above mentioned block (3) further are processed in module (5) by breaking down of documents into composite parts (chapters/sections/paragraphs) which are inputted into module (6), which, according to the determined retrieval criteria, performs multi-criteria analysis of selected composite parts and outputting analyse result of the module (6) inputs to a module (7), which from received information items designs alternative variants and inputs to module (8) for performing multi-criteria analysis of designed alternative variants and accordingly to the outputting analysis result of the module (8), the results of the retrieval are formulated in module (9).

2. Method according to claim 1, **characterised in that** the multi-criteria analysis of the composite parts of the documents which is performed in module (6), comprises the following steps: complex determination of the weights of the criteria taking into account their quantitative and qualitative characteristics; multi-criteria evaluation of the text materials; defining the utility and market value of text materials.

3. Method according to any one of claims 1-2, **characterised in that** the designing of alternative variants from the selected information in the module (7), comprises the following steps: a) development of table of codes of alternative variants of text material; b) rej ection of inefficient variants; c) automatic development of alternative variants of the text based on codes compiled at the step a); d) development of alternative variants of the text describing them characterizing information; and e) development of a table of summary decision from formulated alternative variants of the text with described them characterizing information.

4. Electronic information retrieval system for selecting information from initial electronic data bases, particularly, library of documents, which are stored in a memory blocs (4) of computer nets in the form of information items, such as alphanumerical strings, comprising interface module (1) for inputting of retrieval criteria ant their weights; interface module (2) for inputting retrieval restrictions, which output means are connected with corresponding input means of module (3) for processing and indexing text material from library of documents and which has electronic connection with data bases of library of documents stored in memory blocs (4) of computer nets, wherein above mentioned data processing and indexing module (3) configured to select, process and index documents according to determined criteria and their weights as well as the indicated restrictions and has an electronic link with module (9) in which is formulated the result of the retrieval, which is displayed via the preview interface module (10) to the user **characterised in that** above mentioned electronic link between module (3) and module (9) is configured such that module (3) for processing and indexing retrieval documents has electronic connection with module (5), which is configured to separate out the composite parts (chapters/sections/paragraphs) that are most appropriate for the user from the documents selected in module (3) and by electronic connection to transmit its to module (6), which is configured to perform multi-criteria analysis of above mentioned composite parts and received outputting information items of module (6) to input to module (7), which is configured to formulate alternative variants of the text and by electronic connection to transmit received information items to module (8), which is configured to perform the multi-criteria analysis of alternative variants of the text and received outputting information items of module (8) to transmit by electronic connection to module (9) for formulating retrieval results.

**4** → A library of documents

**1** → Input Interface of retrieval criteria, its synonyms and their weights

**3** → Module for processing and indexing text material from a library of documents

**2** → User-input Interface of retrieval restrictions

**5** → Module for breaking down of documents into composite parts

**6** → Module for the multiple criteria analysis of the composite parts (chapters/sections/paragraphs)

**7** → Module of designing summarised integrated alternatives of the text

**8** → Module for the multiple criteria analysis of summarised integrated alternatives of the text

**9** → Module for formulating retrieval results

**10** → Preview interface module

**Fig. 1**

```
┌─────────────────────────────────────────────────────────┐
│  Development of grouped decision making matrix for text   │
│  material from a library of documents multiple criteria   │
│                        analysis                           │
└─────────────────────────────────────────────────────────┘
                            │
                            ▼
┌─────────────────────────────────────────────────────────┐
│ Quantitative and qualitative criteria weights are         │
│ determined and intercoordinated based on their            │
│ quantitative and qualitative characteristics              │
└─────────────────────────────────────────────────────────┘
                            │
                            ▼
┌─────────────────────────────────────────────────────────┐
│ Significances and priority order of the text alternatives │
│                      are determined                       │
└─────────────────────────────────────────────────────────┘
                            │
                            ▼
┌─────────────────────────────────────────────────────────┐
│   Utility degrees of the text alternatives are found      │
└─────────────────────────────────────────────────────────┘
                            │
                            ▼
┌─────────────────────────────────────────────────────────┐
│  Value of a text alternatives to be valuated is           │
│                     established                           │
└─────────────────────────────────────────────────────────┘
                            │
                            ▼
┌─────────────────────────────────────────────────────────┐
│ Is the value of a text alternative calculated accurately  │
│                        enough?                            │
└─────────────────────────────────────────────────────────┘
           │ No                         │ Yes
           ▼                            ▼
┌──────────────────────┐     ┌──────────────────────────┐
│ The corrected value  │     │  Market value of a text  │
│ of a text alternative│     │ alternative to be        │
│ to be valuated is    │     │ valuated is determined   │
│ calculated           │     │                          │
└──────────────────────┘     └──────────────────────────┘
```

**Fig. 2**

Europäisches
Patentamt

European
Patent Office

Office européen
des brevets

**PARTIAL EUROPEAN SEARCH REPORT**      Application Number

which under Rule 63 of the European Patent Convention EP 09 17 2832
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABNEY S ET AL: "Answer Extraction" PROCEEDINGS OF THE CONFERENCE ON APPLIED NATURAL LANGUAGEPROCESSING, ASSOCIATION COMPUTER LINGUISTICS, MORRISTOWN, NJ, US, 1 April 2000 (2000-04-01), pages 296-301, XP002355126 | 1,4 | INV. G06F17/30 |
| Y | * section 2 "The Question-Answering System"; page 296 - page 297 * | 2-3 | |
| X | WO 2006/121338 A2 (FAST SEARCH & TRANSFER ASA [NO]; OHRN ALEKSANDER [NO]; OLSTAD BJOERN []) 16 November 2006 (2006-11-16) | 1,4 | |
| Y | * claims 1,2,4,20,26,27 * | 2-3 | |
| Y | BANAITIENE ET AL: "Evaluating the life cycle of a building: A multivariant and multiple criteria approach" OMEGA, PERGAMON PRESS, OXFORD, GB, vol. 36, no. 3, 3 May 2007 (2007-05-03), pages 429-441, XP022061698 ISSN: 0305-0483 * abstract * * section 3 "A multivariant and multiple criteria approach" * | 2-3 | |

TECHNICAL FIELDS SEARCHED (IPC)

G06F

-/--

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 27 January 2010 | Hackelbusch, Richard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

PARTIAL EUROPEAN SEARCH REPORT

Application Number

EP 09 17 2832

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | EP 0 752 676 A2 (SUN MICROSYSTEMS INC [US]) 8 January 1997 (1997-01-08) * column 2 - column 8 * ----- | 1-4 | |

TECHNICAL FIELDS
SEARCHED        (IPC)

EPO FORM 1503 03.82 (P04C10)

Europäisches
Patentamt

European
Patent Office

Office européen
des brevets

**INCOMPLETE SEARCH
SHEET C**

Application Number

EP 09 17 2832

Claim(s) completely searchable:
-

Claim(s) searched incompletely:
1-4

Reason for the limitation of the search:

The independent claims 1 and 4 of the present application do not comply
with the provisions of clarity and conciseness in Article 84 EPC. The
meaning of a design of alternative variants as drafted in claim 1
("alternative variants of the text" in claim 4) is not clear. It is even
unclear if alternative versions of the selected text documents, the
selected composite parts of the selected text documents or the initial
query should be designed. Therefore, the goal of performing it is also
not clear. In addition, a multi-criteria analysis of those generated
alternative versions has, as a consequence, no technical effect.
Furthermore, is is not clear why only some of the taken composite parts
of received documents are selected to analyse them and how they are
selected for that issue.
Thus, it is particularly burdensome for a skilled person to establish the
subject-matter for which protection is sought. Non-compliance with the
substantive provisions is such that a meaningful search of the whole
claimed subject-matter could not be carried out (Rule 63 EPC and
Guidelines B-VIII, 3). The extent of the search was consequently limited.
The goal of designing alternative variants in the following is
interpreted as to provide summarized information to the received
documents according to the initial query.
The search was based on the subject-matter that, as far as can be
understood, could reasonably be expected to be claimed later in the
procedure, namely a method for receiving documents from data bases by
comparing the documents with an initial query having different weighted
criteria, selecting, indexing and receiving some of those documents
according to the result of the comparison, breaking them down into
composite parts (like chapters, sections or paragraphs), selecting
composite parts according to the result of an analysis of the parts
according to the initial query in order to create for each selected text
document a new set of text documents giving summarized information to
those selected documents according to the initial query respectively on
the basis of the selected document parts, for each of the selected
documents, ranking those new text documents by performing a
multi-criteria analysis of those new text documents and linking this
ranked lists to the corresponding selected documents and presenting the
result.

**ANNEX TO THE EUROPEAN SEARCH REPORT
ON EUROPEAN PATENT APPLICATION NO.**

EP 09 17 2832

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| WO 2006121338 | A2 | 16-11-2006 | EP | 1880320 A1 | 23-01-2008 |
| | | | JP | 2008541223 T | 20-11-2008 |
| | | | US | 2008270380 A1 | 30-10-2008 |
| EP 0752676 | A2 | 08-01-1997 | DE | 69624985 D1 | 09-01-2003 |
| | | | DE | 69624985 T2 | 18-09-2003 |
| | | | JP | 9223161 A | 26-08-1997 |
| | | | US | 6282538 B1 | 28-08-2001 |
| | | | US | 5724571 A | 03-03-1998 |
| | | | US | 6101491 A | 08-08-2000 |
| | | | US | 6182063 B1 | 30-01-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5297042 A
- US 20060047656 A1